Europäisches Patentamt

European Patent Office

Office européen des brevets

(11) Publication number: **0 006 715**
**B1**

(12) **EUROPEAN PATENT SPECIFICATION**

(45) Date of publication of patent specification: **28.02.90**

(51) Int. Cl.⁵: **H 04 N 1/40, H 04 N 1/00**

(21) Application number: **79301137.0**

(22) Date of filing: **14.06.79**

(54) Method of processing image data.

(30) Priority: **21.06.78 US 917626**

(43) Date of publication of application:
**09.01.80 Bulletin 80/01**

(45) Publication of the grant of the patent:
**28.02.90 Bulletin 90/09**

(84) Designated Contracting States:
**DE FR GB NL**

(56) References cited:
**DE-A-2 224 066**
**US-A-2 921 124**
**US-A-4 068 266**
**US-A-4 084 196**

**IBM TECHNICAL DISCLOSURE BULLETIN Vol.
19, No. 2, July 1976 New York USA,
WONG:"Picture Restoration Algoritm for
Facsimile Machines", pages 668-671**

(73) Proprietor: **XEROX CORPORATION
Xerox Square - 020
Rochester New York 14644 (US)**

(72) Inventor: **Stoffel, James C.
368 Council Rock Avenue
Rochester, New York 14610 (US)**

(74) Representative: **Goode, Ian Roy et al
Rank Xerox Limited Patent Department 364
Euston Road
London NW1 3BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of processing image data in pixels, including scanning an original image to provide a minimal number of pixels for each line scanned representative of the original image and interpolating into the image pixels, additional pixels derived from the original image pixels.

Methods of this kind for processing image data are described in US—A—2 921 124, 4 068 266 and 4 032 977.

US—A—2 921 124 discloses a method of reducing television bandwidth in which image pixels are removed from each scanned line at the transmitting station, followed by transmission of these lines without the removed pixels, and interpolation of new pixels, after transmission into the arriving lines so as to effectively reconstitute the original signal.

US—A—4 068 266 is concerned with matching the resolution characteristics of a transmitter and a receiver of original data. This is achieved by interpolating lines of pixels into existing lines of pixels. US—A—4 032 977 is concerned with a system similar to US—A—4 068 266, but provides a technique for interpolating grey scale image pixels.

Where image data in the form of analog or binary signals is to be handled, the generation of the image data, storage of the data, and transmission of the image data to one or more output stations where the data may be used to produce copies of the original represented by the data, presents conflicting problems in terms of the cost and complexity of the apparatus required versus the quality and resolution of the copies produced. Where one attempts to optimize the quality and resolution of the copies produced, the price paid is usually reflected in increased cost and complexity of the image data producing and handling apparatus, i.e., in the data generating apparatus required to provide image samples or pixels in greater density, in a larger memory to store the imags data pending use, and in increased data bandwidth on transmission of the data from one point to another. On the other hand, where one attempts to reduce and alleviate cost and simplify the data generating and handing apparatus by making fewer samples of the original, the savings is usually at the expense of decreased image resolution and quality.

The present invention is intended to overcome these conflicting problems in the processing of image data in pixels, and provides a method of processing image data in pixels comprising.

scanning an original (6) to provide a succession of analog pixels for each line scanned,

sampling the voltage levels of said succession of analog pixels, forming a boxcar signal wave for said sampled voltage levels by holding eavh voltage level for a preset interval,

interpolating linearly between adjacent ones of said sampled voltage levels of the same line to produce a signal waveform,

frequency enhancing and signal waveform, thresholding said signal waveform to convert the signal waveform to a binary signal wave,

sampling the binary signal wave at a frequency greater than the input frequency of said analog pixels so as to produce a succession of digital pixels with more of said digital pixels per line than the number of said analog pixels per line, and

transmitting said digital pixels to a remote output station.

The invention offers the advantage that resolution of the output image is enhanced, while image storage and transmission bandwidth requirements are reduced.

One way of carrying out the invention will now be described, by way of example, with reference to the drawings, in which:

Figure 1 is a schematic view showing interpolation of additional image pixels in a serial pixel stream of image data;

Figure 2 is a schematic view showing interpolation of additional image pixels both within a line pair of pixels and of an additional line of pixels between the line pair;

Figure 3 is a schematic outline of the image pixel interpolating sysatem of the present invention;

Figure 4 is a schematic view showing details of the linear interpolator and enhancement filter of Figure 3;

Figure 5 is a schmatic view showing details of the image line interpolation system of the present invention;

Figure 6 is a timing chart of the clock pulses for the system of Figure 5;

Figure 7 is a schematic illustrating a representative number of the image pixel patterns stored in memory and the addresses therefor; and

Figure 8 is an isometric view of an exemplary raster input scanning mechanism.

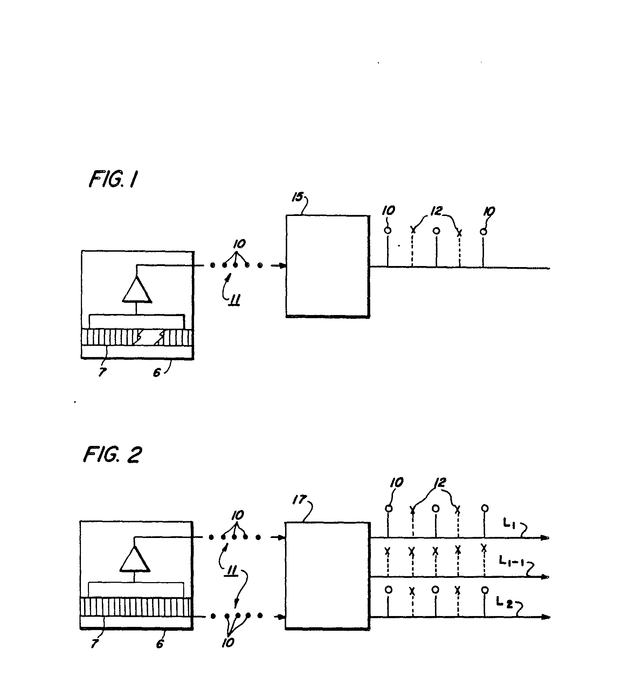

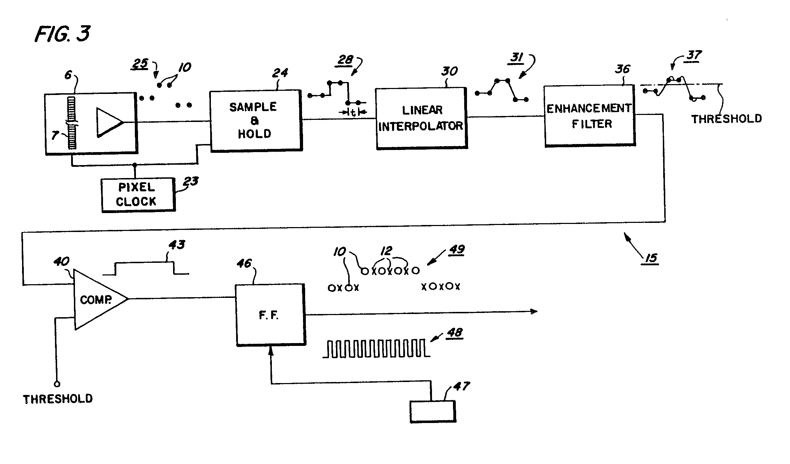

Referring to Figures 1 and 2, there is provided a schematic illustration showing interpolation of additional image pixels 12 between real or original pixels 10 in a serial pixel stream 11 (Fig. 1) and, in Fig. 2, interpolation of an additional image line ($L_{1-1}$) between a pair of image lines ($L_1$, $L_2$) as performed by the present invention. Pixels herein refer to video image data samples or picture elements and may comprise either an analog or binary representation of the image value of a point. Pixels 10 may, for example be obtained through line by line scanning of an image bearing original 6 by one or more arrays of charge coupled devices 7, commonly referred to as CCD's. One CCD is a Fairchild CCD 121—1728 pixel 2-phase linear array by Fairchild Manufacturing Company.

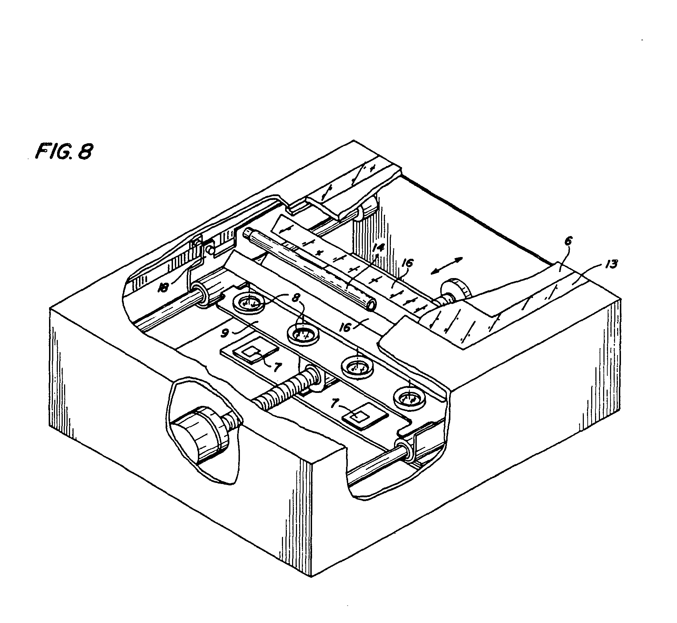

One suitable scanning apparatus is shown in Figure 8, and comprises plural CCDs 7, together with lenses 8 supported so that the viewing fields or areas of the CCDs 7 overlap one another to assure continuity of scan. CCDs 7 and lenses 8 are mounted on a movable carriage 9 spacedly disposed below a transparent piston glass 13 upon which the original document 6 to be scanned is placed. A lamp 14 mounted on the carriage 9 provides illumination with a mirror combination 16 provided to guide the light rays reflected from the original document to the lenses 8 and the CCDs 7. A timing control 18 synchronizes actuation of the CCDs with movement of the carriage 9 so that as the carriage moves past the platen and the original document thereon, a succession of line scans of the original document are made by the CCDs.

Other known methods of generating image data or pixels may be envisioned as for example, a TV camera, etc.

The individual pixels obtained by the scanning apparatus initially comprise analog voltage representations of the gray scale of the area viewed by the individual CCD elements. The CCD elements are driven by a suitable clock 23 (Fig. 3) such that pixels are generated in a serial pixel stream.

For certain purposes, i.e. image storage, transmission, etc, it is advantageous to provide minimal numbers of pixels. At the same time, too few pixels can have adverse effects on the quality of the image produced. The present invention permits minimal input resolution yet provides enhanced image output resolution by interpolating additional or extra pixels 12 between original pixels 10 as seen in Fig. 1. In this embodiment, a one-dimensional interpolator 15 interpolates pixels 12 based on the image value of adjoining pixels 10, it being understood that interpolation may be either on an analog or digital (i.e. 1 or 0) image basis.

In the embodiment shown in Figure 2, an additional line $L_{1-1}$ is interpolated by a two-dimensional interpolator 17 between line pair $L_1$, $L_2$ using pixels 10 and pixels 12 or in the alternative original pixels 10 only.

It will be understood that more than one pixel 12 may be interpolated between adjoining pixels 10 of a line. Similarly, more than one line may be interpolated between adjoining line pairs. Interpolation of an additional line or lines may be made from a single line (i.e. $L_1$) rather than line pair $L_1$, $L_2$.

Referring now to the embodiment shown in Figure 3, the stream of pixels 10, obtained for example, from a CCD scanning array 7, is inputted to sample and hold circuit 24, which may comprise a Datel Corp. Sample and Hold Model SHMUH circuit. An exemplary input pixel wave form is illustrated at 25. Sample and hold circuit 24, which is driven in synchronization with the pixel stream by pixel clock 23, operates to sample the voltage level of each pixel 10 and to produce a voltage level signal representing the pixel voltage over a preset time interval $t$ following which the next pixel is sampled. The output wave form of sample and hold circuit 24 for the exemplary signal input is shown in 28 and may be described as a "box car" wave. The box car signal output of circuit 24 is fed to a linear interpolator 30 where a linear interpolation is made between different pixel voltage levels over the time interval $t$. In essence, interpolator 30 generates a sloping signal line bridging between different voltage levels. The modified box car wave output of interpolator 30 is shown at 31.

From interpolator 30, the interpolated signal is fed to an enhancement filter 36. Filter 36 accommodates the relatively rapid dropoff in light transfer efficiency of the optical elements in the signal generating apparatus, i.e. lenses, by enhancing the high frequencies of the signal. The output wave form of enhancement filter 36, for the exemplary signal input, is shown at 37.

The enhanced signal 37 is fed to one gate of a conventional comparator 40 such as Signetic's Inc. Model No. NE 5008 comparator. A preselected voltage threshold level is applied to the other input gate of comparator 40. For signal voltages above the threshold level, the output of comparator 40 is a binary 1; for signals below the threshold level, the output of comparator 40 is a binary 0. The output wave form of comparator 40 for the exemplary signal input 25 is seen at 43.

The square wave output of comparator 40 is fed to a conventional D type flip-flop 46 such as Texas Instrument Model 74—174 Flip Flop. A square wave clock signal 48, the frequency of which is a multiple of pixel clock 23 is inputted to flip-flop 46 from a suitable clock 47. In the exemplary arrangement shown wherein an interpolated pixel 12 is to be provided between each original pixel 10, the frequency of clock 47 is twice that of pixel clock 23. Signal readings are taken off of the rising or leading edge of clock signal 48 to produce a pixel output stream 49 incorporating both original pixels 10 and interpolated pixels 12.

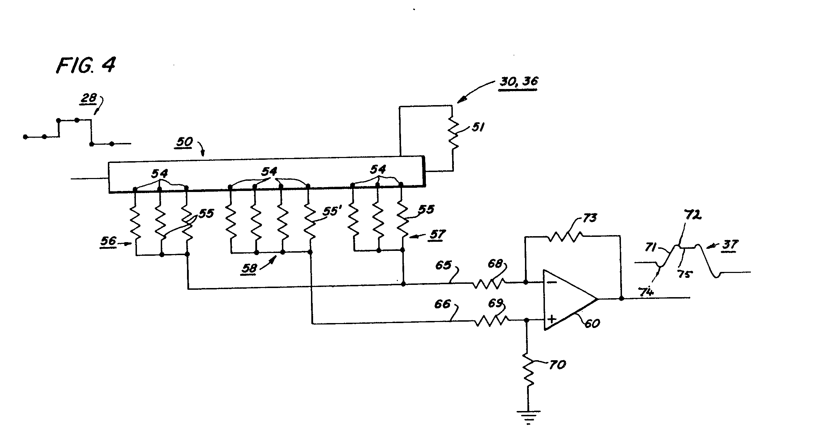

Referring to Figure 4, details of linear interpolator 30 and enhancement filter 36 are there-shown. Interpolator/filter 30, 36 comprises a conventional lumped parameter delay line or circuit 50 such as Model No. 2214—1000 by Data Delay, Inc. effective to impose a predetermined delay on the box car signal input from sample and hold circuit 24 as the signal passes from the input terminal of circuit 50 to the output terminal thereof. A series of voltage taps 54 permit tapping off of the signal after preset incremental delays. A termination resistor 51 inhibits voltage reflections.

Taps 54 of delay circuit 50, which are coupled through resistors 55, 55' to the positive and negative terminal of OP amp 60, provide resistor circuits 56, 57 coupled to the negative terminal of AMP 60 and resistor circuit 58 coupled to the positive terminal of AMP 60. OP amp 60 may comprise any suitable operational amplifier such as an R.C.A. Model No. CA-3100 chip. Resistor circuits 56, 57 each comprise a group of three parallel resistors 55 while resistor circuit 58 comprises a group of four resistors 55', in the exemplary embodiment illustrated. Leads 65, 66 which couple resistor circuit 56, 57 and resistor circuit 58 to the negative and positive terminal of OP amp 60 have control resistors 68, 69 respectively in series therewith. Lead 66 is coupled through resistor 70 to ground. Feedback to the negative terminal of OP amp 60 is provided by resistor 73.

The signal input to delay circuit 50 progresses through circuit 50 over a predetermined interval, the length of which is controlled by the design parameters of the delay circuit 50. One suitable inerpolation/enhancement filter has voltage taps 54 at equal-distant points with a delay interval of 75 nano seconds per voltage tap and with resistors 55 of 4.0 K ohms, resistors 55' of 9.75 K ohms, resistor 51 of 500 ohms, resistor 68 of 20.5 K ohms, resistor 69 of 3.4 K ohms, resistor 70 of 500 K ohms, and resistor 73 of 36 K ohms.

In operation of interpolator/filter 30, 36 on a change in strength of the signal input from sample and hold circuit 24, as for example, an increase between pixel voltage levels, the increased signal voltage wavefront progressively appears at voltage taps 54 along delay circuit 50. With application of the increased voltage signal to resistors 55 of circuit 56 in succession, the change in input signal strength to the negative terminal of OP amp 60 causes a drop in the output signal of OP amp 60 (shown at 4 in wave form 37). The output signal of amp 60 then rises as the increased voltage signal is applied successively to the resistors 55' of circuit 56 with resulting change in the input signal to the positive terminal of OP amp 60 (shown at 71 in wave form 37). As the increased voltage signal progresses through delay circuit 50 to rsistor circuit 57, the signal input to the negative terminal of OP amp 60 undergoes further change resulting in a second dip (shown at 72 in wave form 37) in the output signal of OP amp 60. The signal output of OP amp 60 then stabilizes (shown at 75 in wave form 37) until the next change in the voltage level of the signal input to delay circuit 50.

It will be understood that a decrease in the voltage level of the signal input to delay line 50 produces the opposite effect.

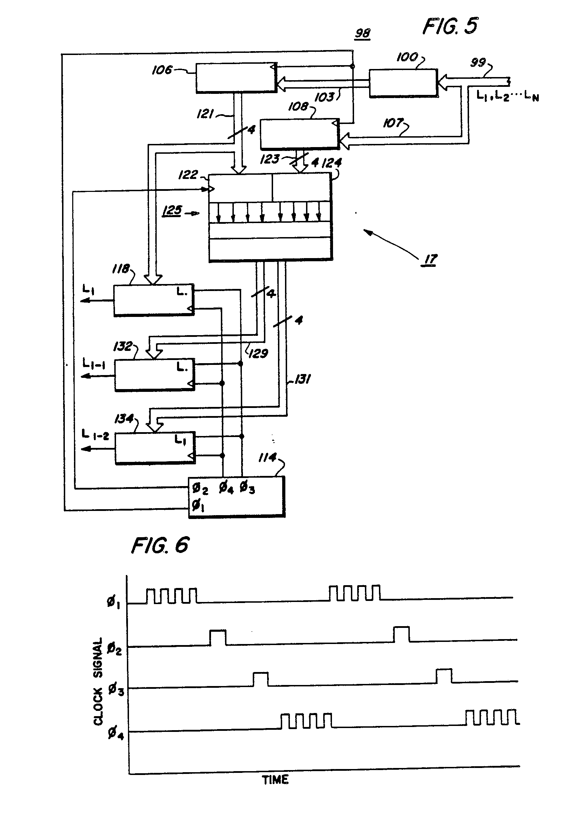

Referring to Figure 5, for line interpolation, binary image data which may or may not include interpolated pixels 12 as aforedescribed, is fed to line interpolator circuit 98 one line pair at a time.

In the exemplary arrangement illustrated, a first line pair, designated as L1, L2 are employed for illustration purposes. It is understood that succeeding line pairs, i.e. lines L2, L3; L3, L4,...Ln-$I_1$, Ln etc. are treated in the same manner. And while image data is described herein as being processed in blocks of four pixels at a time, processing of other size image data blocks may be readily contemplated. It is further understood that where the original image data is in analog form, the data is converted, as by the interpolation process described heretofore, to binary level (i.e. "1" or "0") image data prior to input to line interpolator circuit 98.

In the arrangement shown in Figure 5, image data is received in serial pixel form on a line by line basis from a data source, as for example, an image scanning apparatus of the type shown in Figure 8, or from memory storage, etc., on data input bus 99. Image data in bus 99 is inputted via line delay buffer 100 and data bus 103, and directly via buffer bypass bus 107, to input buffers 106, 108 respectively of interpolator circuit 98. Buffer 100 serves in effect to impose a one line delay on the image data to permit a preceding line (i.e. line L1) to be compared with the next succeeding line (i.e. line L2) on a pixel by pixel basis. During comparison, as line delay buffer 100 is serially unloaded, the next line (i.e. line L2) is simultaneously loaded into buffer 100 for use in comparing that line (i.e. line L2) with the next succeeding line (i.e. line L3).

A suitable clock 114 provides input pixel clock pulses $\phi_1$, address load control pulses $\phi_2$, output pixel load control pulses $\phi_3$, and output pixel clock pulses $\phi_4$. The wave form of clock pulses $\phi$, $\phi_2$, $\phi_3$, $\phi_4$ for the image processing example described herein is shown in Figure 6.

The image data from line delay buffer 100 and in bypass buffer 107 is clocked into input buffer pair 106, 108 on a block by block basis by input pixel clock $\phi_1$. It will be understood that clock signal $\phi_1$, or some other clock signal in synchronism therewith, serves to clock image data from the data source forward in input bus 99 to load fresh data into line delay buffer 100 and provide data in bypass bus 107.

In the exemplary arrangement shown, the image data blocks are four pixels wide. Input buffers 106, 108 comprise serial in-parallel out buffers, which in the example illustrated, are four bits wide each to provide an eight bit address to address buffers 122, 124 of pixel pattern memory 125.

On address load control pulse $\phi_2$, the content of input buffers 106, 108 is read through data buses 121, 123 into address buffers 122, 124 respectively. Address buffers 122, 124, which comprise parallel in-parallel out buffers, address a specific image bit pattern stored in memory 125.

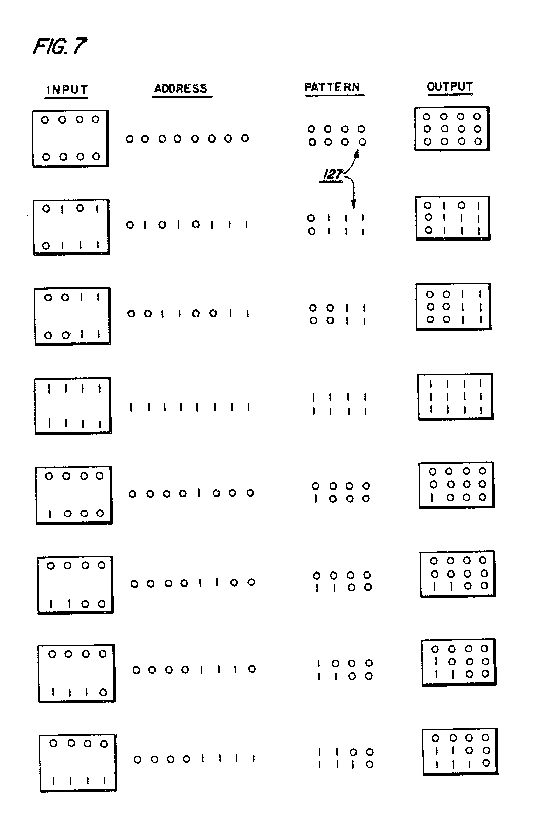

Memory 125, which may comprise any suitable Random Access Memory (RAM), Read Only Memory (ROM), etc., has various image pixel patterns 127, representative samples of which are illustrated in Figure 7, stored therein. The image data in address buffers 122, 124 addresses the specific image pixel pattern 127 associated with that address. In the example shown, an eight bit address, the sum of the blocks of image data in input buffers 106, 108, is used.

On output pixel load control pulse $\phi_3$, memory 125 loads, via data buses 129, 131, output buffers 132, 134 with the specific image pixel pattern addressed which in the present example, results in buffers 132, 134 each being loaded with a specific four pixel block of image data. At the same time, clock pulse $\phi_3$ causes the pixel pattern in input buffer 106 to be read into output buffer 118 through data bus 121.

Output buffers 118, 132, 134 comprise parallel in-serial out buffers. On output pixel clock pulses $\phi_4$, the pixel image data in buffers 118, 132, 134 is serially unloaded to a suitable output such as a memory (not shown) where the image data, comprising both real and interpolated pixels, may be held pending use as for example, by a suitable marking or copying device.

The various buffers of interpolation circuit 98 may comprise any suitable commercially available buffers. In the circuit shown, buffers 100, 106, 108, 118, 132, 134 comprise Texas Instruments Model No. 74—195 buffers, and buffers 122, 124 Texas Instruments Model No. 74—175 buffers. Memory 125 comprises Fairchild Inc. RAM Model No. 93—145 chips.

While in the aforedescribed arrangement a pair of intermediate lines (i.e. L1-1 and L1-2) are interpolated from adjoining line pairs, it will be appreciated that the number of lines interpolated may be as few as one. It will also be understood that the accuracy of the interpolation process decreases with increase in the number of intermediate lines interpolated. And, while interpolation has been described herein using a pair of adjoining lines to predict one or more intermediate lines, the aforedescribed interpolation process may instead employ a single known line as the basis for predicting one or more adjoining lines.

It is understood that the eight pixel address illustrated, the composition thereof as four pixels from adjacent lines (i.e. lines L1, L2), and the four pixel wide two line interpolating image patterns stored in memory 125 are exemplary only, and that addresses of various pixel length and composition as well as image patterns of various pixel length and/or various numbers of interpolated lines may be contemplated instead.

While interpolation of additional pixels 12 may be performed at any point in a data system including the data output station or terminal, since the image data used comprises analog image data, preferably such interpolation is performed at the input station. This avoids the expense of storing data in analog form. The image data, which following interpolation is in binary form, may then be stored and/or transmitted. Transmission of the image data from one site, i.e. the input station to another site, i.e. an output station, may take place in any suitable manner as known to those skilled in the facsimile arts for example.

Line interpolation, which may be performed at any point in a data system including the input station, is preferably performed at the data output station or terminal to reduce data storage needs and transmission bandwidth.

In our copending EP—A—0 006 351 there is described and claimed a method of processing image data in pixels in which entire lines of pixels are interpolated beteen existing lines.

## Claims

1. A method of processing image data in pixels comprising:

scanning an original (6) to provide a succession of analog pixels (10) for each line scanned,

sampling (24) the voltage levels of said succession of analog pixels, forming a boxcar signal wave (28) for said sampled voltage levels by holding each voltage level for a preset interval, interpolating linearly (30) between adjacent ones of said sampled voltage levels of the same line to produce a signal waveform (31),

frequency enhancing (36) said signal waveform,

thresholding (40) said signal waveform (37) to convert the signal waveform to a binary signal wave,

sampling (46) the binary signal wave at a frequency greater than the input frequency of said analog pixels so as to produce a succession of digital pixels (49) with more of said digital pixels per line than the number of said analog pixels per line, and

transmitting said digital pixels to a remote output station.

2. The method of claim 1 including interpolating additional lines of digital pixels at the output station.

## Patentansprüche

1. Verfahren zur Verarbeitung von Bilddaten in Bildpunkten, enthaltend:

Abtasten eines Originals (6), um eine Folge analoger Bildpunkte (10) für jede abgetastete Zeile zu erzeugen,

Abtasten (24) der Spannungspegel der genannten Folge analoger Bildpunkte, Bilden einer Signalwelle (28) kastenförmiger Bestalt für die abgetasteten Spannungspegel, in dem jeder Spannungspegel für ein vorbestimmtes Zeitintervall gehalten wird,

Lineares interpolieren (30) zwischen benachbarten abgetasteten Spannungspegeln derselben Zeile, um eine Signalschwingung (31) zu erzeugen,

Erhöhen (36) der Frequenz der genannten Signalschwingung,

Vergleichen (40) der Signalschwingung (37) mit einem Schwellenwert, um die Signalschwingung in eine binäre Signalschwingung umzuwandeln,

Abtasten (46) der binären Signalschwingung mit einer Frequenz, als größer als die Eingangsfrequenz der analogen Bildpunkte ist, um eine Folge digitaler Bildpunkte (49) zu erzeugen, die mehr digitale Bildpunkte pro Zeile enthält, als die Zahl der analogen Bildpunkte pro Zeile enthält, und

Übertragen der genannten digitalen Bildpunkte zu einer entfernten Ausgabestation.

2. Verfahren nach Anspruch 1, enthaltend des Interpolieren zusätzlicher Zeilen digitaler Bildpunkte an der Ausgabestation.

## Revendications

1. Procédé de traitement de données d'images en pixels comprenant les étapes consistant à:

balayer un original (6) pour fournir une suite de pixels analogiques (10) pour chaque ligne balayée,

échantillonner (24) les niveaux de tension de la suite de pixels analogiques, former une onde (28) de signal à longues impulsions séparées par de très courts intervalles pour les niveaux échantillonnés de tension en maintenant chaque niveau de tension pendant un intervalle préétabli,

faire une interpolation linéaire (30) entre des niveaux contigus des niveaux échantillonnés de tension de la même ligne afin de produire une forme d'onde (31) de signal,

réhausser en fréquence (36) la forme d'onde du signal,

établir un seuil (40) pour la forme d'onde de signal (37) afin de transformer cette forme d'onde en onde de signal binaire,

échantillonner (46) l'onde de signal binaire à une fréquence supérieure à la fréquence d'entrée des pixels analogiques de façon à produire une suite de pixels numériques (49) avec un nombre de pixels numériques par ligne supérieur à celui des pixels analogiques par ligne, et

transmettre les pixels numériques à un poste de sortie situé à distance.

2. Procédé selon la revendication 1, comprenant l'étape d'interpolation de lignes supplémentaires de pixels numériques au poste de sortie.

FIG. 1

FIG. 2

FIG. 3

FIG. 4

FIG. 5

FIG. 6

## FIG. 7

| INPUT | ADDRESS | PATTERN | OUTPUT |
|-------|---------|---------|--------|

FIG. 8